# EUROPEAN PATENT APPLICATION

(11) **EP 3 910 582 A1**
(43) Date of publication of application: **17.11.2021**
(21) Application number: 21173786.1
(22) Date of filing: 13.05.2021
(51) Int. Cl.: G06Q 20/40

(54) **SYSTEM, METHOD AND COMPUTER-ACCESSIBLE MEDIUM FOR EARLY MERCHANT BREACH FRAUD DETECTION**

(30) Priority: 12.05.2020 US 202016872832
(71) Applicant: Capital One Services, LLC, McLean, Virginia 22102 (US)
(72) Inventor: FORT, Paul, McLean, 22102 (US); MARR, Andrew, McLean, 22102 (US); CHEN, Dean, McLean, 22102 (US); MORETON, Paul, McLean, 22102 (US); REEDY, Matthew, McLean, 22102 (US); GILLING, John, McLean, 22102 (US)
(74) Representative: Murgitroyd & Company

(57) **Abstract**

An exemplary system, method, and computer-accessible medium can include receiving financial information related to a transaction(s) at a first merchant, where the transaction(s) can be based on a financial instrument that can be associated with a second merchant, and where the first merchant can be different than the second merchant, declining the transaction(s), and determining a breach at the second merchant based on the transaction(s). The financial instrument can be a virtual credit card number. The virtual credit card number can be bound to the second merchant. A further transaction(s) can be received at (i) the first merchant or a (ii) third merchant, where the further transaction(s) can be based on (i) the financial instrument or (ii) a further financial instrument that can be associated with the second merchant, and where the third merchant can be different than the second merchant and the first merchant.

## Description

### FIELD OF THE DISCLOSURE

The present disclosure relates generally to data breaches, and more specifically, to exemplary embodiments of an exemplary system, method and computer-accessible medium for early merchant breach fraud detection.

### BACKGROUND INFORMATION

A data breach is the intentional or unintentional release of secure or private/confidential information to an untrusted environment. This can sometimes be referred to as unintentional information disclosure, data leak, information leakage and data spills. Incidents include concerted attacks by individuals who hack for some kind of personal gain. A data breach may include incidents such as theft or loss of digital media such as computer tapes, hard drives, or laptop computers containing media upon which information is stored unencrypted, or unauthorized access to a database.

For merchants, a data breach can be expensive to deter. Thus, many small- and medium-sized merchants do not expend enough resources on protecting the merchant's data, which generally includes private information about the merchant's customers. For example, when a credit card transaction is processed by a merchant, this information can be stored in the merchant's database. An unauthorized individual (e.g., a hacker), can gain access to this database, and download or retrieve the credit card information for many of the merchant's customers. The hacker can then use the credit card information to make their own purchase, or the hacker can sell the credit card information to other individuals, who can incur significant charges on the account without the owner of the account (e.g., the customer), knowing about the theft. In many instances, a merchant might not be aware that they have been breached, and the hacker can have a significant amount of time (e.g., a head start) to unload the credit card information before the customer is notified about the breach in order to take action (e.g., close the credit card account).

Additionally, a breach of a merchant that results in a leak of credit card information, or other financial account information, can be a significant burden on banks that are associated with the financial account (e.g., the bank that issued the credit card). Generally, when a person misuses the credit card of another person (e.g., the account holder), the account holder is not responsible for these charges. However, the issuing bank may be responsible for some or all of the losses associated with the misuse. Thus, the quicker a financial institution is informed of a breach, the quicker the financial institution can take action (e.g., shut down the financial account to prevent fraudulent charges).

Thus, it may be beneficial to provide an exemplary system, method, and computer-accessible medium for early merchant breach fraud detection which can overcome at least some of the deficiencies described herein above.

### SUMMARY OF EXEMPLARY EMBODIMENTS

An exemplary system, method, and computer-accessible medium can include receiving financial information related to a transaction(s) at a first merchant, where the transaction(s) can be based on a virtual credit card number, and where the first merchant can be different than the second merchant, declining the transaction(s), determining whether the virtual credit card number is bound to (i) the second merchant or (ii) the second merchant and a further merchant, and determining a breach at the second merchant based on the transaction(s). A further transaction(s) can be received at (i) the first merchant or a (ii) third merchant, where the further transaction(s) can be based on (i) the financial instrument or (ii) a further financial instrument that can be associated with the second merchant, and where the third merchant can be different than the second merchant and the first merchant. The further transaction(s) can be declined, and the breach at the second merchant based can be determined based on the transaction(s) and the further transaction(s).

The virtual credit card number can be determined to be associated with the second merchant by matching the virtual credit card number to a further virtual credit card number in a database, where the further virtual credit card number can be associated with a third merchant, and determining if the third merchant is the same as the second merchant. The third merchant can be determined to be the same as the second merchant based on (i) names of the third merchant and the second merchant; (ii) phone numbers of the third merchant and the second merchant, or (iii) merchant types of the third merchant and the second merchant.

In certain exemplary embodiments of the present disclosure, the first merchant can be determined to be a monetization merchant, where a monetization merchant can be a merchant where a fraudulent transaction can be likely to take place. A determination can be made as to whether the declining of the transaction was a true decline or a false decline, where a true decline can be a correct decline and a false decline can be an incorrect decline. A changepoint analysis procedure can be performed on the true decline, and the breach can be determined based on a result of the changepoint analysis procedure.

Additionally, an exemplary system, method, and computer-accessible medium can include receiving first financial information related to a plurality of transactions at a first merchant that can be associated with a plurality of virtual credit card numbers, determining whether the virtual credit card numbers are bound to a se determining second information related to a frequency of the transactions and an amount of each transaction, generating third information by comparing the second information to a predetermined behavior associated with the first merchant, and determining a breach at the second merchant based on the financial information and the third information.

A determination can be made as to whether the virtual credit card numbers are bound to the second merchant by matching each of the virtual credit card numbers to a further virtual credit card numbers in a database, where the further virtual credit card numbers can be associated with a third merchant, and determining if the third merchant is the same as the second merchant. A determination can be made as to whether the third merchant can be the same as the second merchant based on (i) names of the third merchant and the second merchant; (ii) phone numbers of the third merchant and the second merchant, or (iii) merchant types of the third merchant and the second merchant. A determination can be made as to whether the first merchant can be a monetization merchant, where a monetization merchant can be a merchant where a fraudulent transaction can be likely to take place.

An exemplary system, method, and computer-accessible medium for determining a data breach at a third merchant, can include receiving first financial information related to (i) a plurality of first transactions at a first merchant and (ii) a plurality of second transactions at a second merchant, where the first transactions and the second transactions can be based on virtual credit card numbers bound to the third merchant or to the third merchant and a further merchant(s), determining second information including whether the first merchant and the second merchant are monetization merchants, where a monetization merchant is a merchant where a fraudulent transaction can be likely to take place, declining the first transactions and the second transactions based on the second information, determining third information related to (i) a frequency of the first transactions and the second transactions and (ii) an amount of each of the first transactions and the second transactions, and determining a breach at the third merchant based on the second information and third information.

These and other objects, features and advantages of the exemplary embodiments of the present disclosure will become apparent upon reading the following detailed description of the exemplary embodiments of the present disclosure, when taken in conjunction with the appended claims.

### BRIEF DESCRIPTION OF THE DRAWINGS

Further objects, features and advantages of the present disclosure will become apparent from the following detailed description taken in conjunction with the accompanying Figures showing illustrative embodiments of the present disclosure, in which:
Figure 1 is an exemplary diagram illustrating a hacker hacking a database to obtain credit card information;
Figures 2-4 are flow diagrams of methods for determining data breaches according to an exemplary embodiment of the present disclosure; and
Figure 5 is an illustration of an exemplary block diagram of an exemplary system in accordance with certain exemplary embodiments of the present disclosure.

### DETAILED DESCRIPTION OF EXEMPLARY EMBODIMENTS

With data breaches becoming more and more common, many merchants and financial institutions have begun to use virtual credit card numbers instead of the number printed on a standard credit card. Virtual credit cards are unique credit card numbers that allow a transaction on a financial account without using, or exposing, the financial account number. Virtual credit card numbers can be limited to a single transaction (e.g., a virtual credit card number is generated specifically for a transaction, and then is deactivated after the transaction). Virtual credit card numbers can also be time limited, being active for only a particular period of time (e.g., an hour, a day, a week, a month, etc.). After the particular period of time has expired, the virtual credit card number can be deactivated, and a new one can be issued. The issuer of a virtual credit card number may also allow the account to be locked or deleted, which can help prevent fraudulent purchases without affecting the main financial account. Additional, new, virtual credit card numbers can be created to continue making purchases.

In addition to the above benefits, virtual credit card numbers can also be merchant specific. For example, a customer, or financial institution, can generate a unique virtual credit card number that is associated, or bound, to one or more specific merchants. When the customer shops at that merchant, the customer can use the virtual credit card number, and make purchases. However, if the virtual credit card number is used at a different merchant (e.g., at a merchant not associated or bound with the virtual credit card number), either by the customer or by a third party, the transaction will be denied.

Since virtual credit card numbers can be bound to a specific merchant, the exemplary system, method and computer-accessible medium can utilize information about purchases made using the virtual credit card number to determine a breach at the merchant the virtual credit card number is bound to. When a breach occurs at a merchant, a merchant may not be aware of the breach. For example, small- to medium-sized merchants may not have sufficient data protection in place to protect the data at the merchant. Additionally, they may not be sufficiently sophisticated to detect that a breach has occurred. In such a scenario, if an undetected breach has occurred, the hacker can use the stolen credit card information for a long period of time until the breach is actually detected. Using bound virtual credit card numbers can prevent fraudulent purchases at other merchants. Additionally, the use of a virtual credit card number at another merchant can indicate a breach at the bound merchant. However, a few instances of using virtual credit card numbers bound to one merchant at different merchants does not necessarily indicate that a breach at the bound merchant has occurred. The exemplary system, method and computer-accessible medium, according to an exemplary embodiment of the present disclosure can, using information about the bound virtual credit card number and other transaction information, determine whether or not a breach has actually occurred.

The exemplary system, method and computer-accessible medium, according to an exemplary embodiment of the present disclosure, can be used to analyze declined transactions that are based on virtual credit card numbers that have been bound to a particular merchant. The declined transactions can be mapped to a common point (e.g., a common merchant), and this information, including information about the bound merchant, and information regarding where the virtual credit card numbers were declined, can be used to determine if the bound merchant has been breached.

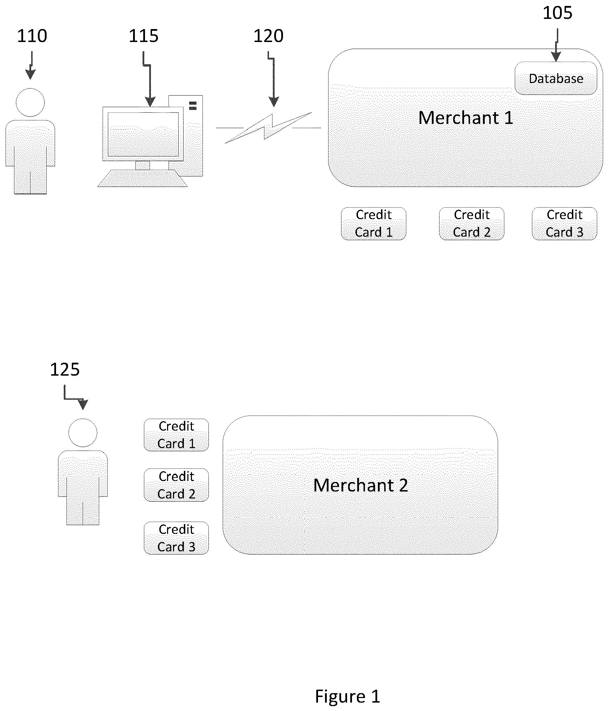

For example, as shown in Figure 1, Merchant 1 can include a database 105 that has information for multiple credit cards (e.g., Credit Card 1, Credit Card 2, and Credit Card 3) stored thereon. These credit cards can be virtual credit card numbers that are bound to Merchant 1. Any suitable bounding procedure can be used including generating a certain number of digits, or a certain sequence of some or all of the digits of each number that are specific to Merchant 1. Various other suitable bounding procedures can be used.

Hacker 110 can use computer 115 to gain access to database 105 at Merchant 1 (e.g., using a network 120, which can be wired or wireless, or by directly gaining access to Merchant 1' s server). Hacker 110 can then download information for the credit cards stored on database 105. Credit Cards 1, 2, 3, and 3 can be virtual credit card numbers, but can look indistinguishable from a standard credit card number. Fraudster 125, who can be hacker 110, or someone that hacker 110 has sold the credit card information to, can take credit cards 1, 2, and 3 and attempt to use them at Merchant 2, or more than one merchant that is different than Merchant 1, in order to buy merchandise, gift cards, etc. However, since credit cards, 1, 2, and 3 are bound the Merchant 1, these transactions will be declined. The exemplary system, method and computer-accessible medium can then detect an increase, or spike, in declines for virtual numbers bound to Merchant 1. If this spike is determined to be unusual activity by the exemplary system, method and computer-accessible medium, then the exemplary system, method and computer-accessible medium can determine that a breach has likely occurred at Merchant 1, and various actions can be taken based on the breach.

For example, if a breach is detected, the exemplary system, method and computer-accessible medium, according to an exemplary embodiment of the present disclosure, can automatically notify Merchant 1 that a breach has occurred. This may be before Merchant 1 has even detected the breach. All virtual credit card numbers bound to Merchant 1 can be cancelled. Additionally, the exemplary system, method and computer-accessible medium can analyze other financial information to determine any non-bound credit cards that were used at Merchant 1. These credit cards can be cancelled, and new ones can be automatically issued. The exemplary system, method and computer-accessible medium can also inform financial institutions that a breach has occurred to facilitate the financial institutions to cancel any credit cards that may have made purchases at Merchant 1.

Various exemplary procedures can be used to determine whether the unusual activity is the result of a breach at Merchant 1. For example, various exemplary models can be used, which can be based on information about Merchant 1, information about the other merchants where the transactions were declined, the number of instances of declined transactions, and other suitable information. For example, information related to the time sequence of the declined transactions, can be used. Models can be generated using exemplary machine learning procedures, which can be used to analyze consumer behavior, as well as financial transactions, and unusual activity, to generate models of breaches. Whenever virtual credit card numbers are involved in declined transactions, the machine learning procedure can be used to analyze the declined transactions and determine a breach.

The exemplary system, method and computer-accessible medium can determine the breach based on the volume of transactions that occur at a specific merchant. For example, a large merchant like Amazon or Walmart can appear different from small- or medium-sized merchants. Additionally, online merchants can be analyzed differently than merchants that only have brick and mortar stores, or merchants that have online stores and brick and mortar stores. Additionally, certain merchants can actually have different merchant identifiers (e.g., merchant names) depending on where and how a transaction is processed. For example, transactions processed by a brick and mortar Walmart store can look different than transactions processed by Walmart. com. All of this information can be analyzed by the exemplary system, method and computer-accessible medium, including by the machine learning procedure, in order to determine if a breach has occurred at a merchant where virtual credit card numbers have been bound.

The exemplary system, method and computer-accessible medium, according to an exemplary embodiment of the present disclosure, can analyze each merchant, and generate a breach profile for the specific merchant. This breach profile can be generated prior to the detection of a breach at the merchant. For example, each merchant having a certain number of virtual credit card numbers bound thereto, which can depend on the size of the merchant or the number of transactions processed by the merchant, can have a profile generated for that merchant after the creation of a certain number of virtual credit numbers bound thereto. This profile can then be used when analyzing declined transactions using virtual credit card numbers associated with the specific merchant. Alternatively, after a certain number of unusual declined transactions is determined, the exemplary system, method and computer-accessible medium can generate a profile for the merchant where the virtual credit card numbers are bound to in order to determine if a breach has occurred.

The exemplary system, method and computer-accessible medium, according to an exemplary embodiment of the present disclosure, can constantly monitor some degree of declined transactions for binding or coding a breach determination. Anomalies for unusual levels of binding declines can be analyzed, which can be applied to any profile generated about the merchant. By automatically monitoring the declined transaction, fraud reports that are generated by customers are no longer needed in order to detect a breach. For example, prior systems relied on customers to identify fraudulent transactions and inform the financial institution about the fraudulent transaction. However, a customer may not be aware of the fraudulent transaction until weeks after the fraudulent transaction has occurred. In contrast, the exemplary system, method and computer-accessible medium can constantly monitor declined transaction for virtual credit card numbers to determine the occurrence of a breach, soon after the breach has occurred, and even before the merchant is aware of the breach.

As discussed above, a financial institution can generate multiple virtual credit card numbers that can be bound to a specific merchant using an exemplary binding procedure. When the merchant is hacked, the virtual credit card numbers may be obtained by the hacker. These virtual credit card numbers can be used at a different merchant (e.g., monetized at a different merchant). However, since the virtual credit card numbers are bound to the first merchant, the transactions will be declined. Suitable logic can be used by the exemplary system, method and computer-accessible medium in order to determine that the second merchant is not the same as the first merchant. This can include the name of the merchant or other biographical information, as well as the geographical information for the merchant. Additionally, the exemplary system, method and computer-accessible medium, according to an exemplary embodiment of the present disclosure, can determine if the first merchant and the second merchant is a near match, allowing the transaction to proceed. For example, if the merchant has various names associated with it (e.g., Walmart, Walmart.com, etc.) then the transaction might not be declined.

Once a sufficient number of declined transactions are determined, the exemplary system, method and computer-accessible medium, according to an exemplary embodiment of the present disclosure, can determine whether or not a breach has occurred. For example, the exemplary system, method and computer-accessible medium can review the merchants where the declined transactions have occurred to determine whether the merchant is a monetization merchant. A monetization merchant is one where fraudsters typically like to monetize (e.g., cash-out the stolen credit card information). This includes merchants such as electronics stores, merchants that sell gift cards, etc. They are the preferred places where fraudsters can easily convert a credit card number to something that can then be converted to cash. If a significant number of declines have occurred at a monetization merchant, this can indicate potentially fraudulent behavior, which can be used by the exemplary system, method and computer-accessible medium to determine a breach at the merchant the virtual credit card numbers were bound to. Whereas, if the transaction occurred at a non-monetization merchant, this may indicate that a breach has not occurred.

The exemplary system, method and computer-accessible medium, according to an exemplary embodiment of the present disclosure, can analyze transaction amounts and transaction frequency and determine if they align to typical behavior for the merchant where the bind decline occurred. Thresholds for transaction amounts, transaction frequency, and typical behavior can be determined by the exemplary system, method and computer-accessible medium. These thresholds can be determined for each merchant, using, for example, historical transaction data. For example, if a particular merchant typically has 100 transactions per day at a $25 average transaction amount, and the exemplary system, method and computer-accessible medium observes 200 transactions per day at $100 average amount, this can be a determination of a breach.

The exemplary system, method and computer-accessible medium, according to an exemplary embodiment of the present disclosure, can determine whether the bind decline was a "true" decline (e.g., determined by string mismatches) or a "false" decline (e.g., an error within our bind decline logic). True declines are declines that happen when the Binding logic, which binds the virtual credit card number to a particular merchant is functioning correctly. However, there can be errors in the binding logic that can lead to unintended declines, or false declines. For example, a merchant might come across in a transaction as "MerchantXYZ" 90% of the time, and 10% of the time the merchant can come across as "MrchXYZ". Since "MrchXYZ" does not match "MerchantXYZ". A transaction that occurs at "MrchXYZ" may be declined. However, once a false decline is determined, the exemplary system, method and computer-accessible medium can be updated to facilitate a transaction at "MrchXYZ" to not be declined.

For "true" declines, these declined purchases can be mapped back to a common bound place of purchase. A "common bound purchase" is the source of the decline transactions. If 100 bind declines are observed, and 80 of them come from a particular merchant (e.g., a monetization merchant), this can be the common place of purchase. For these "true" declines, an exemplary changepoint analysis procedure can be used to determine whether the bind decline patterns are normal or "alarming. A Changepoint analysis procedure can be used to determine anomalies in a time series data that has a regular pattern. In this case, the "regular pattern" can be that there are not many, or any, bind declines, as most virtual credit card number holders are using the numbers appropriately. Occasionally, there can be some honest users misusing bound virtual credit card numbers at non-bound merchants, which can result in a declined purchase. In such a case, there may not be a breach at the bound merchant. The exemplary system, method and computer-accessible medium can use a changepoint analysis procedure to make this determination. For example, the changepoint analysis procedure can be used to determine if the volume of bind declines exceeds what can be expected (e.g., exceeds a particular threshold) even based on the noise produced by honest misuse. This volume can depend on the bound merchant in question. For example, many more virtual credit card numbers will be bound to larger merchants (e.g., Walmart or Amazon). Thus, more honest misuse can be expected at these merchants. The exemplary system, method and computer-accessible medium, according to an exemplary embodiment of the present disclosure, can automatically tune the threshold based on the bound merchant. For "alarming" patterns of bind declines, a validation procedure can be performed to determine whether the pattern indicates a breach.

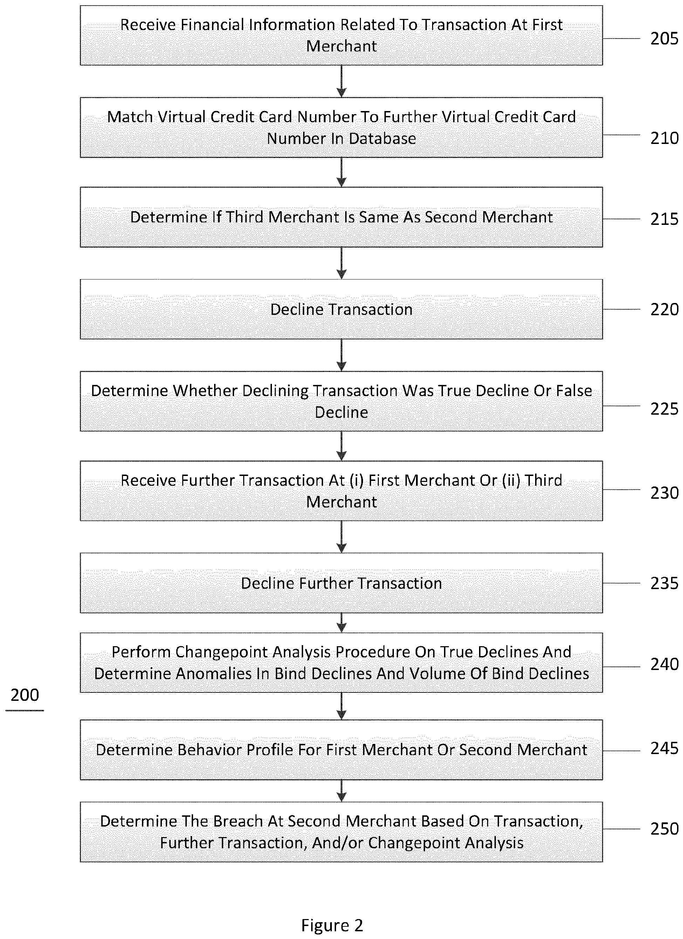

Figures 2, 3, and 4 are exemplary flow diagrams of exemplary methods 200, 300, and 400, respectively, for performing procedures according to an exemplary embodiment of the present disclosure.

For example, as shown in Figure 2, at procedure 205, financial information related to a transaction at a first merchant can be received. The financial information can include information related to a specific transaction, and a financial instrument (e.g., a virtual credit card number) used to make the transaction. At procedure 210, a virtual credit card number can be matched to a further virtual credit card number in a database. At procedure 215, a determination can be made as to whether a third merchant is the same as the second merchant. This can be performed, for example, by looking at the biographical information related to the merchant (e.g., merchant name, abbreviations, addresses, phone numbers, doing business as names, etc.). At procedure 220, the transaction can be declined. At 225, a determination can be made as to whether the declining of the transaction was a true decline or a false decline. A true decline can be a correct decline, whereas a false decline is a decline that should not have occurred. At procedure 230, a further transaction at (i) the first merchant or (ii) the third merchant can be received. At procedure 235, the further transaction can be declined. At procedure 240, a changepoint analysis procedure can be performed on the declined transactions to determine if the declines is a true decline. The changepoint analysis can be used to examine transaction histories, frequencies, and amounts, for the merchant. At procedure 245, a behavior profile can be determined for the first merchant and/or the second merchant. At or 250, the breach at the second merchant can be determined based on the transaction, the further transaction, and/or the changepoint analysis

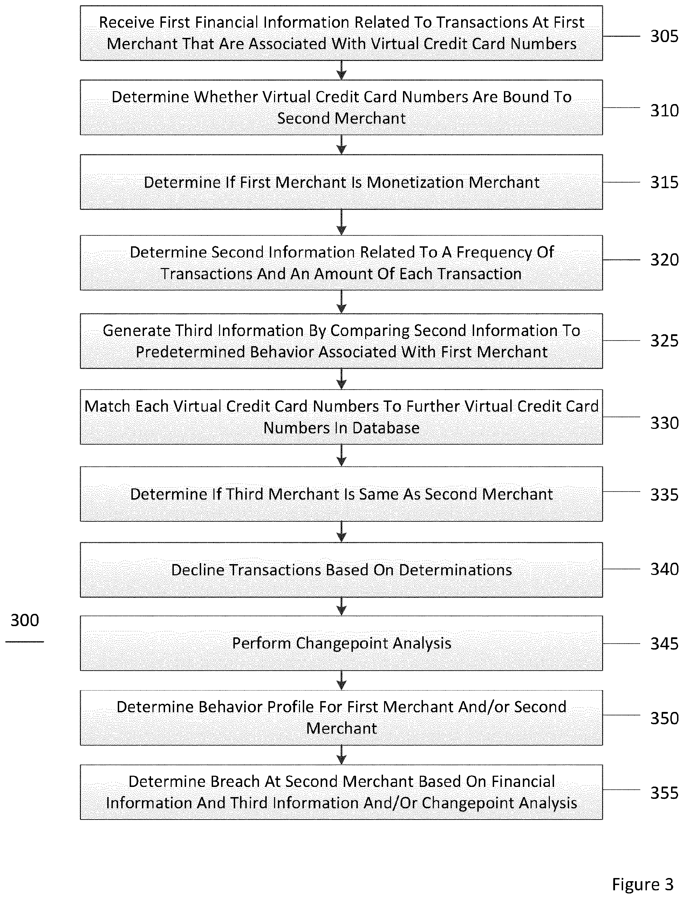

As shown in Figure 3, at procedure 305, first financial information related to transactions at a first merchant that are associated with virtual credit card numbers can be received. At procedure 310, a determination can be made as to whether the virtual credit card numbers are bound to a second merchant. This can be performed by matching the virtual credit card numbers to further virtual credit card numbers stored in a database. At procedure 315, a determination can be made as to whether the first merchant is a monetization merchant (e.g., a merchant where fraud is likely to occur). At procedure 320, second information related to a frequency of the transactions and an amount of each transaction can be determined. At procedure 325, third information can be generated by comparing the second information to a predetermined behavior associated with the first merchant. At procedure 325, a determination can be made as to whether the financial instruments are associated with the second merchant. At procedure 330, each of the financial instruments can be matched to a further financial instrument in a database. At procedure 335, a determination can be made as to whether a third merchant is the same as the second merchant. At procedure 340, the transactions can be declined based on the determinations. At procedure 345, a changepoint analysis can be performed. At procedure 350, a behavior profile for the first merchant and/or the second merchant can be determined. At procedure 355, a breach at the second merchant can be determined based on the financial information and the third information, and/or the changepoint analysis.

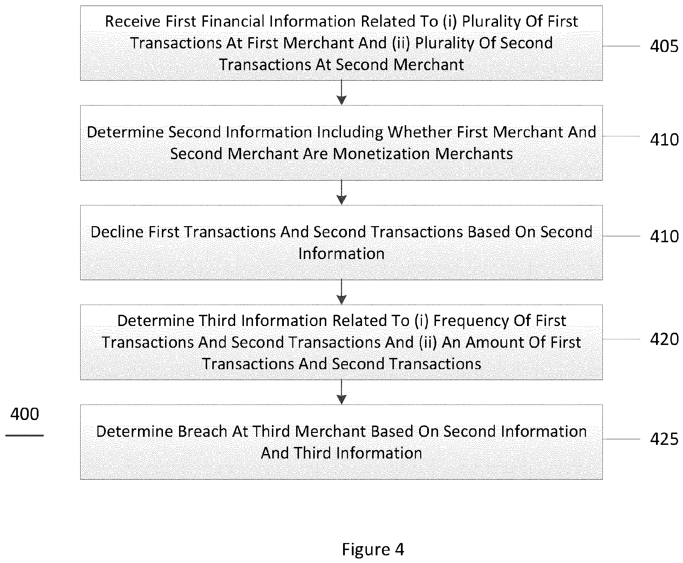

As shown in Figure 4, at procedure 405, first financial information related to (i) a plurality of first transactions at a first merchant and (ii) a plurality of second transactions at a second merchant can be received. At procedure 410, second information can be determined including whether the first merchant and the second merchant are monetization merchants. At procedure 415, the first transactions and the second transactions can be declined based on the second information. At procedure 420, third information related to (i) a frequency of the first transactions and the second transactions and (ii) an amount of each of the first transactions and the second transactions can be determined. At procedure 425, a breach at the third merchant can be determined based on the second information and third information.

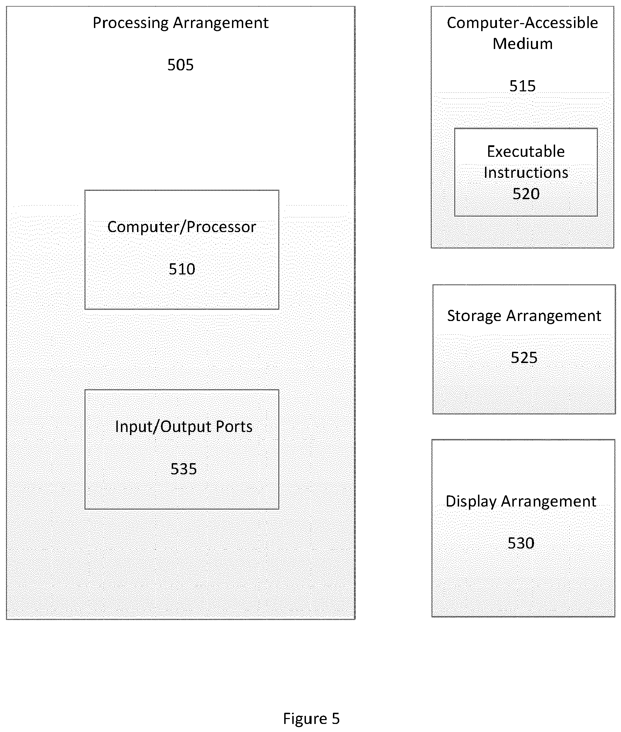

Figure 5 shows a block diagram of an exemplary embodiment of a system according to the present disclosure. For example, exemplary procedures in accordance with the present disclosure described herein can be performed by a processing arrangement and/or a computing arrangement (e.g., computer hardware arrangement) 505. Such processing/computing arrangement 505 can be, for example entirely or a part of, or include, but not limited to, a computer/processor 510 that can include, for example one or more microprocessors, and use instructions stored on a computer-accessible medium *(e.g.,* RAM, ROM, hard drive, or other storage device).

As shown in Figure 5, for example a computer-accessible medium 515 (*e.g.,* as described herein above, a storage device such as a hard disk, floppy disk, memory stick, CD-ROM, RAM, ROM, etc., or a collection thereof) can be provided (*e.g.,* in communication with the processing arrangement 505). The computer-accessible medium 515 can contain executable instructions 520 thereon. In addition or alternatively, a storage arrangement 525 can be provided separately from the computer-accessible medium 515, which can provide the instructions to the processing arrangement 505 so as to configure the processing arrangement to execute certain exemplary procedures, processes, and methods, as described herein above, for example.

Further, the exemplary processing arrangement 505 can be provided with or include an input/output ports 535, which can include, for example a wired network, a wireless network, the internet, an intranet, a data collection probe, a sensor, etc. As shown in Figure 5, the exemplary processing arrangement 505 can be in communication with an exemplary display arrangement 530, which, according to certain exemplary embodiments of the present disclosure, can be a touch-screen configured for inputting information to the processing arrangement in addition to outputting information from the processing arrangement, for example. Further, the exemplary display arrangement 530 and/or a storage arrangement 525 can be used to display and/or store data in a user-accessible format and/or user-readable format.

The present disclosure is not to be limited in terms of the particular embodiments described in this application, which are intended as illustrations of various aspects. Many modifications and variations can be made without departing from its spirit and scope, as may be apparent. Functionally equivalent methods and apparatuses within the scope of the disclosure, in addition to those enumerated herein, may be apparent from the foregoing representative descriptions. Such modifications and variations are intended to fall within the scope of the appended representative claims. The present disclosure is to be limited only by the terms of the appended representative claims, along with the full scope of equivalents to which such representative claims are entitled. It is also to be understood that the terminology used herein is for the purpose of describing particular embodiments only, and is not intended to be limiting.

## Claims

1. A non-transitory computer-accessible medium having stored thereon computer-executable instructions, wherein, when a computer hardware arrangement executes the instructions, the computer arrangement is configured to perform procedures comprising:
receiving financial information related to at least one transaction at a first merchant, wherein the at least one transaction is based on a virtual credit card number, and wherein the first merchant is different than the second merchant;
determining whether the virtual credit card number is bound to (i) the second merchant or (ii) the second merchant and a further merchant;
declining the at least one transaction; and
determining a breach at the second merchant based on the at least one transaction.

2. The computer-accessible medium of claim 1, wherein the computer arrangement is further configured to determine a behavior profile for at least one of the first merchant or the second merchant, wherein the behavior profile is based on threshold transaction amounts for further transactions and a transaction frequency.

3. The computer-accessible medium of claim 2, wherein the computer arrangement is further configured to determine the breach based on the behavior profile determined for second merchant.

4. The computer-accessible medium of claim 1, wherein the computer arrangement is further configured to:
receive at least one further transaction at at least one of (i) the first merchant or (ii) a third merchant, wherein the at least one further transaction is based on (i) the financial instrument or (ii) a further financial instrument that is associated with the second merchant, and wherein the third merchant is different than the second merchant and the first merchant;
decline the at least one further transaction; and
determine the breach at the second merchant based on the at least one transaction and the at least one further transaction.

5. The computer-accessible medium of claim 1, wherein the computer arrangement is configured to determine that the virtual credit card number is bound to the second merchant by:
matching the virtual credit card number to a further virtual credit card number in a database, wherein the further virtual credit card number is associated with a third merchant; and
determining if the third merchant is the same as the second merchant.

6. The computer-accessible medium of claim 5, wherein the computer arrangement is configured to determine if the third merchant is the same as the second merchant based on at least one of (i) names of the third merchant and the second merchant; (ii) phone numbers of the third merchant and the second merchant, or (iii) merchant types of the third merchant and the second merchant.

7. The computer-accessible medium of claim 1, wherein the computer arrangement is further configured to determine if the first merchant is a monetization merchant, wherein a monetization merchant is a merchant where a fraudulent transaction is likely to take place.

8. The computer-accessible medium of claim 1, wherein the computer arrangement is further configured to determine whether the declining of the transaction was a true decline or a false decline.

9. The computer-accessible medium of claim 8, wherein the computer arrangement is further configured to perform a changepoint analysis procedure on the true decline, and determine the breach based on a result of the changepoint analysis procedure.

10. The computer-accessible medium of claim 9, wherein the computer arrangement is further configured to use the changepoint analysis to determine anomalies in the number of bind declines are at least one of the first merchant or the second merchant.

11. The computer-accessible medium of claim 9, wherein the computer arrangement is configured to use the changepoint analysis to determine if a volume of bind declines at the first merchant exceeds a particular threshold.

12. A non-transitory computer-accessible medium having stored thereon computer-executable instructions, wherein, when a computer hardware arrangement executes the instructions, the computer arrangement is configured to perform procedures comprising:
receiving first financial information related to a plurality of transactions at a first merchant that are associated with a plurality of virtual credit card numbers
determining whether the virtual credit card numbers are bound to a second merchant;
declining the transactions based on the determination;
determining second information related to a frequency of the transactions and an amount of each transaction;
generating third information by comparing the second information to a predetermined behavior associated with the first merchant; and
determining a breach at the second merchant based on the financial information and the third information.

13. The computer-accessible medium 12, wherein the computer arrangement is further configured to determine a behavior profile for at least one of the first merchant or the second merchant.

14. The computer-accessible medium of claim 13, wherein the behavior profile is based on threshold transaction amounts for further transactions and a transaction frequency.

15. The computer-accessible medium of claim 14, computer arrangement is further configured to determine the breach based on the behavior profile determined for second merchant.

16. The computer-accessible medium of claim 1, wherein the computer arrangement is further configured to perform a changepoint analysis procedure to determine the breach.

17. The computer-accessible medium of claim 16, wherein the computer arrangement is configured to determine that the virtual credit card numbers are bound to the second merchant by:
matching each of the virtual credit card numbers to further virtual credit card numbers in a database, wherein the further virtual credit card numbers are associated with a third merchant; and
determining if the third merchant is the same as the second merchant.

18. The computer-accessible medium of claim 17, wherein the computer arrangement is configured to determine if the third merchant is the same as the second merchant based on at least one of (i) names of the third merchant and the second merchant; (ii) phone numbers of the third merchant and the second merchant, or (iii) merchant types of the third merchant and the second merchant.

19. The computer-accessible medium of claim 12, wherein the computer arrangement is further configured to determine if the first merchant is a monetization merchant, wherein a monetization merchant is a merchant where a fraudulent transaction is likely to take place.

20. A method, for determining a data breach at a third merchant, comprising:
receiving first financial information related to (i) a plurality of first transactions at a first merchant and (ii) a plurality of second transactions at a second merchant, wherein the first transactions and the second transactions are based on virtual credit card numbers bound to at least one of (i) the third merchant or (ii) the third merchant and at least one further merchant;
determining second information including whether the first merchant and the second merchant are monetization merchants, wherein a monetization merchant is a merchant where a fraudulent transaction is likely to take place;
declining the first transactions and the second transactions based on the second information;
determining third information related to (i) a frequency of the first transactions and the second transactions and (ii) an amount of each of the first transactions and the second transactions; and
determining a breach at the third merchant based on the second information and third information.
